# EUROPÄISCHE PATENTSCHRIFT

(11) **EP 3 536 391 B1**
(45) Veröffentlichungstag und Bekanntmachung des Hinweises auf die Patenterteilung: **13.01.2021**
(21) Anmeldenummer: 19157905.1
(22) Anmeldetag: 19.02.2019
(51) Int. Cl.: B01D 35/027, B01D 29/07

(54) **FILTER**
FILTER
FILTRE

(30) Priorität: 08.03.2018 DE 102018001945
(43) Veröffentlichungstag der Anmeldung: 11.09.2019
(73) Patentinhaber: Hydac Filtertechnik GmbH, 66280 Sulzbach/Saar (DE)
(72) Erfinder: Kleemann, Daniel, 57515 Alsting (FR); Nenno, Alexander, 66646 Marpingen (DE); Schneider, André Michael, 66399 Mandelbachtal (DE)
(74) Vertreter: Bartels und Partner, Patentanwälte

(56) Entgegenhaltungen:
- EP-A1- 0 517 410
- DE-U1- 7 930 682
- GB-A- 401 287
- US-A1- 2006 169 632

## Beschreibung

Die Erfindung betrifft ein Filter, insbesondere Getriebeölfilter, mit den Merkmalen im Oberbegriff von Anspruch 1 sowie eine Filtervorrichtung zur Aufnahme eines solchen Filters.

Um über lange Betriebszeiträume hinweg einen sicheren und störungsfreien Betrieb von Getrieben sicherzustellen, ist es Stand der Technik, für das Getriebeöl eine Filtervorrichtung vorzusehen, vergleiche DE 10 2007 023 641 B4, in der eine Filtervorrichtung für Getriebeöl offenbart ist, die als Saugfilter arbeitet. Die Auslegung als Saugfilter zeichnet sich im Vergleich zu einer Druckölfiltervorrichtung durch einen wesentlich geringeren Bedarf an Einbauraum aus, so dass sie, anders als Druckölfiltervorrichtungen, die üblicherweise in einem Nebenstrom arbeitet und innerhalb des Getriebegehäuses oder am Getriebegehäuse außen angebracht sind, ohne Schwierigkeiten unmittelbar in den Ölsumpf der Ölwanne des betreffenden Getriebes einbaubar sind.

Bei der erwähnten Lösung des Standes der Technik sind in dem Bestreben, eine geringe Bauhöhe zu realisieren, die einen Einbau in den sehr begrenzten, in einem Getriebegehäuse zur Verfügung stehenden Freiraum ermöglicht, als Filterelemente zwei flache Bahnen aus einem Filtervlies vorgesehen. Diese Bahnen sind in Vertikalrichtung, d.h. in Richtung des vom Boden des Getriebegehäuses her einströmenden Saugstromes, zueinander versetzt, wobei die Bahnen durch zwischen ihnen befindliche Abstandhalter in vertikalem Abstand voneinander gehalten sind. Zwar lässt sich dadurch eine verhältnismäßig geringe Bauhöhe realisieren, jedoch steht mit den flachen Bahnen aus Filtervlies nur eine geringe wirksame Filterfläche zur Verfügung, so dass die Effizienz der Abreinigung sich als zumindest für bestimmte Anwendungen als unzureichend erweisen mag.

Die DE 79 30 682 U1 beschreibt ein Filter, insbesondere Getriebeölfilter, mit in einem zumindest teilweise fluiddurchlässigen Stützgehäuse aufgenommenen Filterpaket, dessen Filtermaterial in Falten gleicher Bauhöhe und Baulänge gelegt ist, wobei die einzelnen Filterfalten des Filterpaketes eine An- und eine Abströmseite aufweisen, die der Unfiltrat- bzw. Filtratseite entsprechen, und wobei die Anströmseite aller Filterfalten an eine zentrale Versorgungsstelle für Fluid angeschlossen ist, die Bestandteil einer fußseitigen Abschlusskappe des Stützgehäuses ist.

Weitere Filter gehen aus der US 2006/0169632 A1, der GB 401 287 A und der EP 0 517 410 A1 hervor.

Ausgehend von diesem Stand der Technik stellt sich die Erfindung die Aufgabe, ein Filter zur Verfügung zu stellen, das sich sowohl durch eine besonders kompakte Bauweise als auch durch eine im Vergleich zur Baugröße besonders große wirksame Filterfläche auszeichnet.

Erfindungsgemäß ist diese Aufgabe durch ein Filter mit den im Patentanspruch 1 angegebenen Merkmalen gelöst.

Gemäß dem Kennzeichen von Anspruch 1 ist vorgesehen, dass die beiden freien Längsseiten der beiden äußersten Falten, die das gefaltete Filtermaterial in Längsrichtung parallel zu den Filterfalten begrenzen, jeweils um einen Längsrand der Abschlusskappe herumgelegt und an diesem Längsrand unter Bildung eines Festlegestreifens festgelegt sind.

Die Festlegestreifen bilden dadurch in Zusammenwirkung mit den geschlossenen Endkappen des Stützgehäuses die Trennung zwischen der Versorgungsstelle an der Abschlusskappe und der Außenseite des Filterpakets und damit die Trennung zwischen der Unfiltratseite und der äußeren Filtratseite am Filterpaket.

Weiter ist ein in einem zumindest teilweise fluiddurchlässigen Stützgehäuse aufgenommenes Filterpaket vorgesehen, dessen Filtermaterial in Falten gleicher Bauhöhe und Baulänge gelegt ist. Mit einem aus einer solchen Faltenanordnung gebildeten Filterpaket ist eine besonders große wirksame Filterfläche im Vergleich zur Gesamtabmessung des Filters realisierbar.

Mit Vorteil kann die Anordnung so getroffen sein, dass das Stützgehäuse das Filterpaket umfasst und dass die Falten des Filterpaketes mit ihren beiden einander gegenüberliegenden, freien Stirnseiten jeweils in Anlage sind mit einer die Baulänge der Falten vorgebenden, geschlossenen Endkappe des Stützgehäuses.

Die einzelnen Filterfalten des Filterpaketes weisen eine An- und eine Abströmseite auf, die der Unfiltrat- bzw. Filtratseite entsprechen, wobei die Anströmseite aller Filterfalten an eine zentrale Versorgungsstelle für Fluid angeschlossen ist, die Bestandteil einer fußseitigen Abschlusskappe des Stützgehäuses ist.

Mit besonderem Vorteil kann die Anordnung so getroffen sein, dass das Stützgehäuse mit seinem fluiddurchlässigen Mantelteil, im Wesentlichen bestehend aus Längs- und Querstreben, sich bogenförmig zwischen seinen beiden Endkappen und der Abschlusskappe erstreckt. Das Mantelteil mit seinen Streben, wie auch Endkappen und Abschlusskappe können mit Vorteil aus einem Kunststoffwerkstoff, wie aus PA6, als Spritzgussteil hergestellt sein.

Mit Vorteil können die Längsstreben des Mantelteils parallel zu den Filterfalten zwischen den beiden Endkappen verlaufen, während die Querstreben quer dazu verlaufend angeordnet sind.

Das Stützgehäuse kann unter Bildung einer Art Schutzhaube der zumindest teilweisen äußeren Abstützung des Filtermaterials mit seinen Filterfalten dienen.

Zur Vervollständigung dieser Trennung ist der jeweilige Festlegestreifen an seinem jeweils freien Ende an einer benachbarten Endkappe des Stützgehäuses aufgenommen.

Bei bevorzugten Ausführungsbeispielen weist das Filterpaket 5 bis 25, vorzugsweise 8 bis 20, Filterfalten in Zick-Zack-Anordnung gefaltet auf, die in dem Stützgehäuse aufgenommen sind.

Mit Vorteil kann das Filtermaterial zwei- oder mehrlagig und von seiner Filterfeinheit als Grobfilter ausgebildet sein, wobei über ein Draht- oder Kunststoffgitter, das die Filterseiten zumindest teilweise umfasst, deren Eigenstabilität gewährleistet ist.

Gegenstand der Erfindung ist gemäß dem Patentanspruch 9 auch eine Filtervorrichtung zur Aufnahme eines Filters nach einem der Patentansprüche 1 bis 8, der tauschbar in einem Filtergehäuse aufgenommen ist, das einen Sauganschluss auf der Abströmseite des Filters und einen Versorgungsanschluss auf der Unfiltratseite des Filters aufweist.

Mit Vorteil kann hierbei der Versorgungsanschluss des Filtergehäuses einen Anschlussstutzen ausbilden, auf den ein Versorgungsstutzen der Versorgungsstelle des Filters aufschiebbar ist.

Nachstehend ist die Erfindung anhand eines in der Zeichnung dargestellten Ausführungsbeispiels im Einzelnen erläutert. Es zeigen:
- Fig. 1: einen Längsschnitt des Ausführungsbeispiels des erfindungsgemäßen Filters, aufgenommen in einem ebenfalls im Schnitt dargestellten Filtergehäuse; und
- Fig. 2: eine perspektivische Schrägansicht des Ausführungsbeispiels, die teils in Längsrichtung und teils in Querrichtung aufgeschnitten gezeichnet ist.

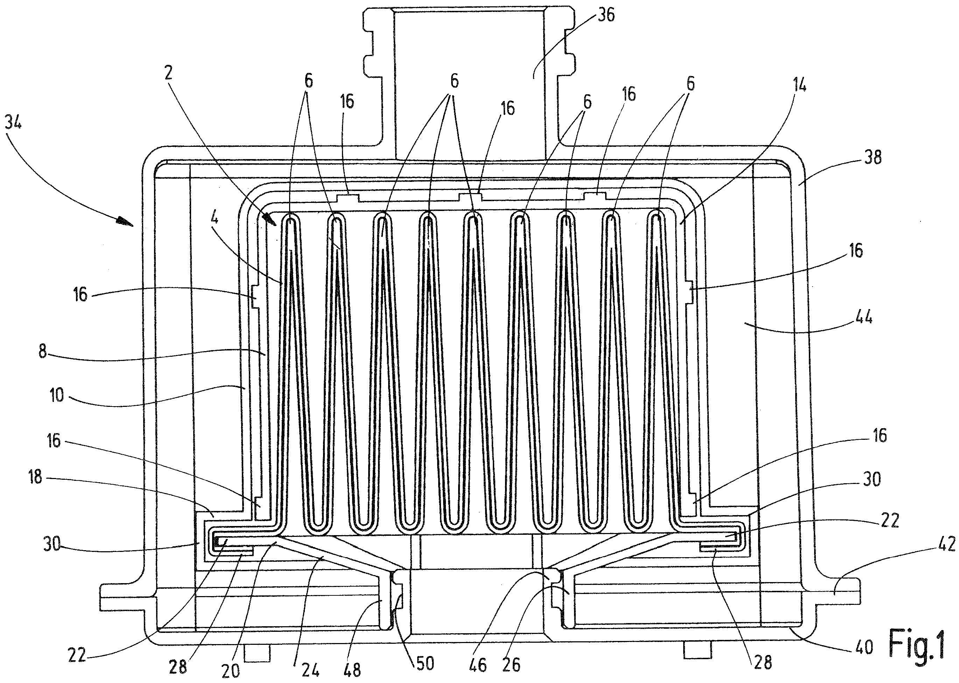

Das vom Getriebeöl zu durchströmende Filtermedium des erfindungsgemäßen Filters ist durch ein Filterpaket 2 gebildet, das im großen Ganzen die Form eines Würfels besitzt. Das Paket 2 ist aus einem Filtermaterial 4 in Form einer flachen Bahn gebildet, die in Falten gelegt ist. Wie die Figuren zeigen, ist die Faltung derart ausgebildet, dass gleichförmige Falten 6 gebildet sind, die die gleiche Bauhöhe (gemessen in Vertikalrichtung der Figuren) und die gleiche Baulänge (gemessen senkrecht zur Zeichnungsebene der Fig. 1) besitzen. Beim gezeigten Ausführungsbeispiel sind zur Bildung des Filterpakets 2 neun Falten 6 vorgesehen. Das Filtermaterial 4 besteht, wie bei gefalteten oder plissierten Filtermaterialien üblich, aus mehreren Lagen, wobei über ein Draht- oder Kunststoffgitter, das die Falten 6 zumindest teilweise umfasst, eine Art Mesh-Pack gebildet ist, das den Falten 6 eine Eigenstabilität verleiht.

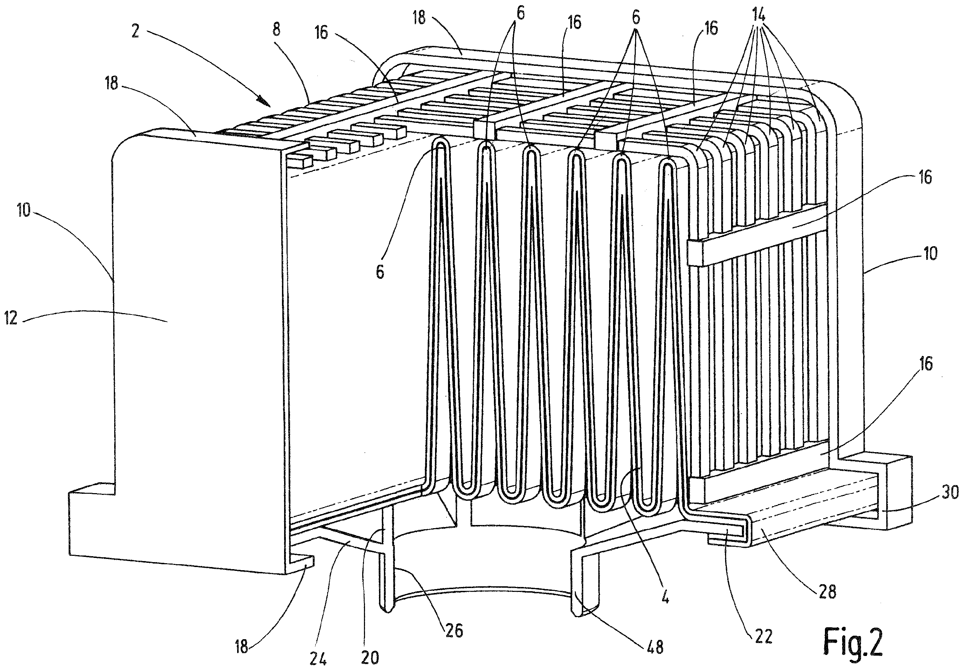

Das so gebildete Filterpaket 2 ist als Grobfilter ausgelegt, mit einer Filterfeinheit im Bereich von 50 bis 100 *µ*m. Als äußere Einfassung für das Filterpaket 2 sind ein Stützgehäuse 8 sowie zwei Endkappen 10 vorgesehen. Die letzteren sind gleich ausgebildet und weisen eine ebene, geschlossene Deckfläche 12 (s. Fig. 2) auf, die die axiale Baulänge der Falten 6 begrenzen, die mit ihren freien Stirnseiten an den Deckplatten 12 anliegen. Das Stützgehäuse 8 hat die Form einer fluiddurchlässigen Ummantelung, die in der Art einer Schutzhaube eine teilweise äußere Abstützung des Filterpakets 2 bildet. Die Ummantelung ist käfigartig aus zwei Gruppen von Streben gebildet, von denen, wie am deutlichsten der Fig. 2 entnehmbar ist, eine als Längsstreben 14 bezeichnete Gruppe sich in geringem Abstand voneinander in bogenförmigem Verlauf entlang der beiden vertikalen Seitenränder und des horizontalen oberen Seitenrandes der Endkappen 10 erstreckt. Als zweite Gruppe sind als Verbinder der Längsstreben 14 zu diesen senkrecht verlaufende Querstreben 16, die in größerem Abstand voneinander angeordnet sind als die Längsstreben 14, vorgesehen und erstrecken sich über die gesamte Reihe der Längsstreben 14 von Deckplatte 12 zu Deckplatte 12 der Endkappen 10. Die beiden stirnseitigen Enden des aus den Streben 14, 16 gebildeten Mantels des Stützgehäuses 8 sind von einem abgewinkelten Einfassungsrad 18 der Endkappen 10 übergriffen (s. Fig. 2).

Der fußseitige Abschluss des Filterpakets 2 ist durch eine Abschlusskappe 20 gebildet, die von einem horizontalen, außenliegenden Längsrand 22 her über ein trichterartiges Bodenteil 24 in eine Öffnung 26 übergeht, die die Versorgungsstelle für den Zustrom von Unfiltrat zur Innenseite des Filterpakets 2 bildet. Für die Bildung der Trennstelle zwischen der inneren Unfiltratseite des Filterpakets 2 und der vom Stützgehäuse 8 umgebenen, äußeren Filtratseite sind bei den beiden äußersten Falten 6 die beiden freien Längsseiten 28 derart verlängert, dass sie um den zugeordneten Längsrand 22 der Abschlusskappe 20 herumlegbar und daran unter Bildung eines Festlegestreifens festlegbar sind. Wie am deutlichsten die Fig. 2 zeigt, bilden die Einfassungsränder 18 der Endkappen 10 mit einem seitlich vorstehenden Endteil 30 eine die Längsseiten 28 der letzten Falten 6 umfassende Aufnahme für den am Längsrand 22 der Abschlusskappe 20 gebildeten Festlegestreifen.

Die Fig. 1 zeigt beispielhaft die das erfindungsgemäße Filter aufnehmende Filtervorrichtung. Für die tauschbare Aufnahme des Filters weist die Filtervorrichtung ein Filtergehäuse 34 auf, das zweiteilig mit einem einen Sauganschluss 36 aufweisenden Gehäuseoberteil 38 und einem Bodenteil 40, die an einer Verbindungsstelle 42 lösbar miteinander verbunden sind, ausgebildet ist. Das Oberteil 38 hat, wie das Filterpaket 2 mit dem Stützgehäuse 8, im großen Ganzen die Form eines Würfels, der das Stützgehäuse 8 unter Bildung eines seitlichen Freiraumes 44 umgibt, der die Filtratseite bildet, die mit dem Sauganschluss 36 in Verbindung ist. Das Bodenteil 40 besitzt die Form einer flachen Wanne mit einem zentral gelegenen, nach innen vorstehenden Anschlussstutzen 46, in den ein Versorgungsstutzen 48 einsteckbar ist, der an der Öffnung 26 der Abschlusskappe 20 die Versorgungsstelle als Eingang für das Unfiltrat bildet. Eine am Anschlussstutzen 46 ausgebildete Ringnut 50 bildet den Sitz für ein die Abdichtung an den Stutzen 46, 48 bildendes Dichtelement. Das das Filterpaket 2 umgebende Stützgehäuse 8 sowie die Endkappen 10 und die Abschlussplatte 20 können als Spritzgussteile aus einem Kunststoffmaterial wie PA6 gebildet sein, wobei die Verbindungen zwischen diesen Bauteilen durch Kleben oder Schweißen gebildet sein können. Für das Filtergehäuse 34 der das erfindungsgemäße Filter aufnehmenden Filtervorrichtung kann, abhängig vom jeweiligen Einsatzzweck, ebenfalls ein Kunststoffwerkstoff oder gegebenenfalls ein metallischer Werkstoff vorgesehen sein.

Zusammenfassend ist mit der erfindungsgemäßen Lösung ein plissierter Flachfilter verwirklicht mit zwei stirnseitigen Endkappen 10 und einem integrierten Ansaugstutzen in der fußseitigen Abschlusskappe 20. Der erfindungsgemäße Flachfilter in Kubusform baut im Hinblick auf seine hohe Filterleistung ausgesprochen klein auf und ist insoweit für die engen Einbauverhältnisse, wie sie beispielhaft in Doppelkupplungsgetrieben vorliegen, besonders geeignet. Die jeweils erste und letzte Falte der Filterfaltenanordnung lassen sich am besten mittels Ultraschall-Schweißverfahren mit der Abschlusskappe 20 verbinden. Neben dem beschriebenen Herumlegen um einen Längsrand 22 der Abschlusskappe 20 lassen sich die freien Längsseiten 28 der beiden äußersten Falten 6 auch von oben auf den jeweiligen Längsrand 22 der Abschlusskappe 20 auflegen, um dann mittels des genannten Ultraschall-Schweißverfahrens mit dem zugeordneten Längsrand 22 fest verbunden zu werden. Zur Aufnahme des jeweiligen Längsrandes 22 mit der zugeordneten Längsseite 28 weisen die beiden Endkappen 10 fuß- oder bodenseitig kastenförmige Ausbuchtungen auf, die einen entsprechenden Kanalquerschnitt für die Aufnahme begrenzen.

Die rechteckförmig ausgebildeten Endkappen 10 lassen sich an ihren einander benachbarten Stirnseiten jeweils mit den Filterfaltenenden (offene Mesh-Pack-Enden) verbinden, beispielsweise im Rahmen eines Schweißverfahrens, wie eines Laser-Durchstrahlschweißverfahrens, wie es beispielhaft in der DE 10 2007 013 178 A1 aufgezeigt ist. Zusätzlich oder anstelle eines solchen Laserschweißverfahrens kann auch ein Klebe-Verbindungsprozess treten, beispielsweise unter Einsatz von Ein- oder Zwei-Komponenten-Klebern. Insgesamt ist mit der beschriebenen Filterfaltenanordnung erreicht, dass das Filterpaket 2 zwar als Ganzes quer zur Anströmrichtung orientiert ist; jedoch die einzelnen Filterfalten 6 im Wesentlichen parallel zur Anströmrichtung verlaufen.

Der Versorgungsanschluss 48, der in das Filterelement respektive Filterpaket 2 integriert ist, steht somit mit seiner freien Durchflussöffnung quer zu den einzelnen Filterfalten 6. Der Fluid- oder Ölstrom trifft also insoweit direkt auf das Filterpaket 2 ohne weitere Umlenkung. Zwischen dem Versorgungsanschluss 48 und dem eben verlaufenden Plateauteil mit den beiden Längsrändern 22 der Abschlusskappe 20 ist in Richtung des Versorgungsstutzens 48 die Kappe 20 konisch zulaufend ausgeführt, was eine Homogenisierung der Fluidströmung begünstigt. Am dahingehend konischen Zulauftrichter sind Stege, insbesondere vier sternförmig angeordnete Stege angebracht, die zur fußseitigen Abstützung des Filterpakets 2 oder Mesh-Packs dienen.

Ferner kann auf mindestens einer Innenseite einer seitlich angeordneten Endkappe 10 eine nicht näher dargestellte Stützgeometrie angeordnet sein, beispielsweise in Form von Stützstegen, die zwischen die Abstände der einzelnen Filterfalten 6 eingreifen, um diese dergestalt im Rahmen der Durchströmung zu stabilisieren. Die nicht näher dargestellte Stützgeometrie kann dabei je nach Fügeverfahren entweder in das Klebebett für die Filterfalten 6 einer Endkappe 10 mit eingeklebt sein und/oder zusammen mit den Filterfalten 6 des Filterpaketes 2 an die verbleibende andere Endkappe 10 angeschweißt werden.

Je nach Einsatzfall können Faltenhöhen der Falten 6 von 6 mm bis 70 mm realisiert werden. Die für eine sinnvolle Durchströmung benötigten Faltenabstände zwischen einander benachbarten Filterfalten 6 lassen sich durch Drainagelagen sowohl auf der An- als auch auf der Abströmseite realisieren, so dass der Fluid- oder Ölstrom mit möglichst wenig Saugdruckverlust durch das Filterpaket 2 strömen kann. Durch eine im freien Durchmesserquerschnitt großzügig bemessene Öffnung 26 sowie durch einen im Durchmesser groß gewählten Konusverlauf für die Abschlusskappe 20 lässt sich der Ölstrom auf der Eingangsseite des Filterpaketes 2 derart großflächig verteilen, dass jede Filterfalte 6 von unten nach oben gleichförmig und mit gleichen Volumina durchströmt wird. Jede einzelne Filterfalte 6 ist zur Abschlusskappe 20 konisch erweitert und bildet insoweit einen konisch nach oben hin zulaufenden Anströmraum aus. Nach Durchströmen der einzelnen Filterfalte 6 von innen nach außen ausgehend von diesem Anströmraum, gelangt dann das gefilterte Fluid auf die Abströmseite mit einem Abströmraum zwischen zwei einander benachbarten Falten 6, der sich in Richtung des Stützgehäuses 8 nach oben hin konisch erweitert.

Das Filterpaket 2 kann im Sinne einer partiellen Überdeckung auch aus einzelnen, übereinanderliegenden Filterbahnen (nicht dargestellt) für die Filterfalten 6 gebildet sein, mit unterschiedlichen Filterfeinheiten, so dass sich eine Parallelschaltung aus Grob- und Feinfiltermaterial und/oder Feinstfiltermaterial ergibt.

Der erfindungsgemäße flache, plissierte Saugfilter ist in jedem Fall ein optionales Filterkonzept zu zylindrischen oder ovalen Filterelementen und kann diese unter bestimmten Bauraumbedingungen ohne Weiteres ersetzen. Bei Lösungen mit partieller Überdeckung des Filterelementmaterials 4 ist, wie ausgeführt, eine Parallelschaltung von Grob- und Feinfilter in einem Filterpaket 2 möglich, wobei der Großteil des Volumenstroms grobfiltriert werden soll und ein restlicher Volumenstrom wird feinfiltriert und sorgt über die Betriebszeit hinweg für ein sehr gutes Reinheitsniveau im Bereich von nahezu 100 % feinfiltriertem Fluid oder Öl. Das Volumenstromverhältnis zwischen Grob- und Feinfilteranteil ist dabei abhängig von den gewählten Filterflächen und den Filterfeinheitsverhältnissen. Besonders geringe Differenzdrücke sind im Filterbetrieb auch durch die koaxiale Anordnung der Strukturen 46, 48 mit dem Stutzen 36 des Sauganschlusses im Filtergehäuse 34 bezogen auf deren gemeinsame Mittenachse erreicht.

## Patentansprüche

1. Filter, insbesondere Getriebeölfilter, mit in einem zumindest teilweise fluiddurchlässigen Stützgehäuse (8) aufgenommenen Filterpaket (2), dessen Filtermaterial (4) in Falten (6) gleicher Bauhöhe und Baulänge gelegt ist, wobei die einzelnen Filterfalten (6) des Filterpaketes (2) eine An- und eine Abströmseite aufweisen, die der Unfiltrat- bzw. Filtratseite entsprechen, und wobei die Anströmseite aller Filterfalten (6) an eine zentrale Versorgungsstelle (26) für Fluid angeschlossen ist, die Bestandteil einer fußseitigen Abschlusskappe (20) des Stützgehäuses (8) ist, **dadurch gekennzeichnet, dass** die beiden freien Längsseiten (28) der beiden äußersten Falten (6), die das gefaltete Filtermaterial (4) in Längsrichtung parallel zu den Filterfalten (6) begrenzen, jeweils um einen Längsrand (22) der Abschlusskappe (20) herumgelegt und an diesem Längsrand (22) unter Bildung eines Festlegestreifens (22, 28) festgelegt sind.

2. Filter nach Anspruch 1, **dadurch gekennzeichnet, dass** das Stützgehäuse (8) das Filterpaket (2) umfasst und dass die Falten (6) des Filterpaketes (2) mit ihren beiden einander gegenüberliegenden, freien Stirnseiten jeweils in Anlage sind mit einer die Baulänge der Falten (6) vorgebenden, geschlossenen Endkappe (10) des Stützgehäuses (8).

3. Filter nach Anspruch 2, **dadurch gekennzeichnet, dass** das Stützgehäuse (8) mit seinem fluiddurchlässigen Mantelteil, im Wesentlichen bestehend aus Längs- (14) und Querstreben (16), sich bogenförmig zwischen seinen beiden Endkappen (10) und der Abschlusskappe (20) erstreckt.

4. Filter nach Anspruch 3, **dadurch gekennzeichnet, dass** die Längsstreben (14) des Mantelteils parallel zu den Filterfalten (6) zwischen den beiden Endkappen (10) verlaufen und die Querstreben (16) quer dazu verlaufend angeordnet sind.

5. Filter nach einem der vorstehenden Ansprüche, **dadurch gekennzeichnet, dass** das Stützgehäuse (8) unter Bildung einer Art Schutzhaube der zumindest teilweisen äußeren Abstützung des Filtermaterials (4) mit seinen Filterfalten (6) dient.

6. Filter nach einem der vorstehenden Ansprüche, **dadurch gekennzeichnet, dass** der jeweilige Festlegestreifen (22, 28) an seinem jeweils freien Ende in einer benachbarten Endkappe (10) des Stützgehäuses (8) aufgenommen ist.

7. Filter nach einem der vorstehenden Ansprüche, **dadurch gekennzeichnet, dass** das Filterpaket (2) 5 bis 25, vorzugsweise 8 bis 20, Filterfalten (6) in Zick-Zack-Anordnung gefaltet aufweist, die in dem Stützgehäuse (8) aufgenommen sind.

8. Filter nach einem der vorstehenden Ansprüche, **dadurch gekennzeichnet, dass** das Filtermaterial (4) zwei- oder mehrlagig und von seiner Filterfeinheit als Grobfilter ausgebildet ist und dass über ein Draht- oder Kunststoffgitter, das die Filterfalten (6) zumindest teilweise umfasst, deren Eigenstabilität gewährleistet ist.

9. Filtervorrichtung zur Aufnahme eines Filters nach einem der vorstehenden Ansprüche, der tauschbar in einem Filtergehäuse (34) aufgenommen ist, das einen Sauganschluss (36) auf der Abströmseite des Filters und einen Versorgungsanschluss (48) auf der Unfiltratseite des Filters aufweist.

10. Filtervorrichtung nach Anspruch 9, **dadurch gekennzeichnet, dass** der Versorgungsanschluss des Filtergehäuses (34) einen Anschlussstutzen (46) ausbildet, auf den ein Versorgungsstutzen (48) der Versorgungsstelle (26) des Filters aufschiebbar ist.

## Claims

1. Filter, in particular a transmission oil filter, comprising a filter package (2) received in an at least partially fluid-permeable support housing (8), the filter material (4) thereof being placed in folds (6) of the same structural height and length, the individual filter folds (6) of the filter package (2) having an upstream and a downstream side, which correspond to the unfiltered medium or filtrate side respectively, and the upstream side of all filter folds (6) being connected to a central supply point (26) for fluid, which forms part of a closure cap (20) on the bottom of the support housing (8), **characterised in that** the two free longitudinal sides (28) of the two outermost folds (6), which delimit the folded filter material (4) in the longitudinal direction parallel to the filter folds (6), each lie around a longitudinal edge (22) of the closure cap (20) and are fixed to this longitudinal edge (22), forming a fixing strip (22, 28).

2. Filter according to claim 1, **characterised in that** the support housing (8) surrounds the filter package (2) and **in that** the folds (6) of the filter package (2), via the two opposite free end faces of said folds, are in each case in contact with a closed end cap (10) of the support housing (8) which defines the structural length of the folds (6).

3. Filter according to claim 2, **characterised in that** the support housing (8), with its fluid-permeable jacket portion, substantially consisting of longitudinal (14) and transverse struts (16), extends in an arcuate form between the two end caps (10) thereof and the closure cap (20).

4. Filter according to claim 3, **characterised in that** the longitudinal struts (14) of the jacket portion run parallel to the filter folds (6) between the two end caps (10), and the transverse struts (16) are arranged such that they run transversely thereto.

5. Filter according to any one of the preceding claims, **characterised in that** the support housing (8) serves to provide an at least partial outer support for the filter material (4) with its filter folds (6) by forming a kind of protective cover.

6. Filter according to any one of the preceding claims, **characterised in that** the respective fixing strip (22, 28) is received at its respective free end in an adjacent end cap (10) of the support housing (8).

7. Filter according to any one of the preceding claims, **characterised in that** the filter package (2) comprises 5 to 25, preferably 8 to 20, filter folds (6) folded in a zigzag arrangement, which are received in the support housing (8).

8. Filter according to any one of the preceding claims, **characterised in that** the filter material (4) has two or more layers and, in terms of its filter grade, is designed as a coarse filter, and **in that** its inherent stability is guaranteed by means of a wire or plastic mesh which at least partially surrounds the filter folds (6).

9. Filter device for receiving a filter according to any one of the preceding claims, which is exchangeably received in a filter housing (34), which comprises a suction connection (36) on the downstream side of the filter and a supply connection (48) on the unfiltered medium side of the filter.

10. Filter device according to claim 9, **characterised in that** the supply connection of the filter housing (34) forms a connection nozzle (46) onto which a supply nozzle (48) of the supply point (26) of the filter can be pushed.

## Revendications

1. Filtre, notamment filtre de l'huile d'une transmission, comprenant un paquet (2) de filtre, qui est logé dans un boîtier (8) d'appui perméable au fluide au moins en partie et dont la matière (4) filtrante est mise en plis de même hauteur et même longueur. Les divers plis (6) du paquet (2) de filtre ayant un côté d'afflux et un côté de sortie, qui correspondent au côté du non filtrat au côté du filtrat, et dans lequel le côté d'afflux de tous les plis (6) du filtre est raccordé à un point (26) central d'alimentation en fluide, qui est une partie constituante d'une coiffe (20) de fermeture, du côté du pied, du boîtier (8) d'appui, **caractérisé en ce que** les deux grands côtés (28) libres des deux plis (6) les plus à l'extérieur, qui délimitent la matière (4) filtrante pliée dans la direction longitudinale parallèlement aux plis (6) du filtre, sont repliés chacun autour d'un bord (22) longitudinal de la coiffe (20) de fermeture et sont fixés à ce bord (22) longitudinal en formant une bande (22, 28) de fixation.

2. Filtre suivant la revendication 1, **caractérisé en ce que** le boîtier (8) d'appui entoure le paquet (2) de filtre et **en ce que** les plis (6) du paquet (2) de filtre sont, par leurs deux côtés frontaux libres opposés l'un à l'autre, respectivement en contact avec une coiffe (20) d'extrémité du boîtier (8) d'appui fermé et prescrivant la longueur des plis (6).

3. Filtre suivant la revendication 2, **caractérisé en ce que** le boîtier (8) d'appui s'étend par sa partie latérale perméable au fluide, constituée essentiellement de longerons (14) et de traverses (16), en forme d'arc entre ces deux coiffes (10) d'extrémité et la coiffe (20) de fermeture.

4. Filtre suivant la revendication 3, **caractérisé en ce que** les longerons (14) de la partie latérale s'étendent parallèlement aux plis (6) du filtre entre les deux coiffes (10) d'extrémité et les traverses (16) s'y étendent transversalement.

5. Filtre suivant l'une des revendications précédentes, **caractérisé en ce que** le boîtier (8) d'appui sert, en formant une sorte de hotte de protection, à l'appui extérieur au moins en partie de la matière (4) filtrante par ses plis (6) de filtre.

6. Filtre suivant l'une des revendications précédentes, **caractérisé en ce que** la bande (22, 28) respective de fixation est logés à son extrémité libre respective dans une coiffe (10) d'extrémité voisine du boîtier (8) d'appui.

7. Filtre suivant l'une des revendications précédentes, **caractérisé en ce que** le paquet (2) de filtre a de 5 à 25, de préférence, de 8 à 20 plis (6) de filtre, suivant un agencement en zigzag, qui sont logés dans le boîtier (8) d'appui.

8. Filtre suivant l'une des revendications précédentes, caractérisant la matière (4) filtrante est constituée de deux couches ou de plusieurs couches et par sa finesse de filtre sous le forme d'un filtre grossier et en ce que sa stabilité propre est assurée par une grille en fil métallique ou en matière plastique, qui entoure au moins en partie les plis (6) du filtre.

9. Installation de filtration pour la réception d'un filtre suivant l'une des revendications précédentes, qui est logé dans une enveloppe (34) de filtre pouvant être remplacée, qui a un raccord (36) d'aspiration du côté du filtrat fuite du filtre et un raccord (48) d'alimentation du côté du non filtrat du filtre.

10. Installation de filtration sur la revendication 9, caractérisant le raccord d'alimentation de l'enveloppe (34) de filtre constitue une tubulure (46) de raccordement, sur laquelle une tubulure (48) d'alimentation peut être enfilée au point (26) d'alimentation du filtre.
